# EUROPÄISCHE PATENTSCHRIFT

(11) **EP 2 475 903 B1**
(45) Veröffentlichungstag und Bekanntmachung des Hinweises auf die Patenterteilung: **22.04.2020**
(21) Anmeldenummer: 10752543.8
(22) Anmeldetag: 02.09.2010
(51) Int. Cl.: F16C 33/66, F01D 25/16, F16C 19/18, F16C 19/08, F16C 33/40, F16C 33/76

(54) **Ladedruckerzeuger**
Charge pressure generating device
Dispositif de génération de pression de charge

(30) Priorität: 12.09.2009 EP 09011699
(43) Veröffentlichungstag der Anmeldung: 18.07.2012
(73) Patentinhaber: Aktiebolaget SKF, 415 50 Göteborg (SE)
(72) Erfinder: BETTENHAUSEN, Jens, 97900 Külsheim (DE); HAUCK, Helmut, 97502 Euerbach (DE); HEEGE, Thomas, 97422 Schweinfurt (DE); HERBST, Hubert, 97503 Gädheim (DE); KAMM, Sandra, 97469 Gochsheim (DE)
(74) Vertreter: Schonecke, Mitja
(86) Internationale Anmeldenummer: PCT/EP2010/062839
(87) Internationale Veröffentlichungsnummer: WO 2011/029765

(56) Entgegenhaltungen:
- EP-A1- 0 241 879
- EP-A2- 0 095 561
- DE-A1-102006 017 443
- JP-A- 10 103 347
- US-B2- 7 371 011

## Beschreibung

Die Erfindung betrifft einen Ladedruckerzeuger einer Brennkraftmaschine mit einer Lagereinheit für eine Welle einer Druckerzeugungsvorrichtung,wobei die Welle durch mindestens ein erstes Wälzlager und mindestens ein zweites Wälzlager gelagert ist, wobei jedes Wälzlager einen Innenring und einen Außenring aufweist, wobei zwischen den Ringen ein Ringraum gebildet wird und wobei in dem Ringraum Wälzkörper angeordnet sind.

Eine Lagereinheit dieser Art ist beispielsweise aus der US 7 371 011 B2 und aus der DE 20 2004 017 194 U1 bekannt. Die Welle eines Abgasturboladers ist hier in zwei Schrägkugellagern geführt, die gegeneinander angestellt sind und so die Welle unter einer definierten Vorspannung halten.

Bekannte Systeme zum Aufladen von Brennkraftmaschinen, insbesondere Turbolader, basieren zumeist auf rotierenden Teilsystemen, die in der Regel mittels Wälzlagerungen gelagert sind. Dabei ist eine ausreichende Schmierung der Lager ein wichtiger und die Gebrauchsdauer des Lagers bestimmender Faktor.

Um dem stetigen Kostendruck zu genügen, ist eine Fettschmierung einer Ölschmierung vorzuziehen. Allerdings ergibt sich bei einer Lagerung, bei der die zu lagernde Welle nicht horizontal ausgerichtet ist, infolge der Schwerkraft das Problem, dass das zur Schmierung notwendige Fett bzw. das darin befindliche Öl über die Zeit dazu neigt, aus dem Bereich der Wälzlagerlaufbahnen zu entweichen. Dies bedingt zumeist in einem solchen Falle eine komplette Abdichtung der eingesetzten Lager.

Es existieren Anwendungen bei Ladersystemen, die bewusst eine Schräglage der Lagerungen zulassen oder fordern, im Extremfall sogar eine senkrechte Rotationsachse vorschreiben. Eine solche Situation tritt beispielsweise bei den sogenannten gasdynamischen Druckwellenmaschinen auf.

Lageranordnungen ohne Bezug zu der in Rede stehenden Anwendung sind aus der DE 10 2006 017 443 A1, aus der EP 0 241 879 A1**,** aus der EP 0 095 561 A1 und aus der JP 10 103347 A bekannt.

Der Erfindung liegt die **Aufgabe** zugrunde, eine Lagereinheit einer Druckerzeugungsvorrichtung der eingangs genannten Art so fortzubilden, dass problemlos auch Positionen der Welle der Druckerzeugungsvorrichtung eingenommen werden können, die nicht der horizontalen Lage entsprechen. Dabei soll stets sichergestellt werden, dass eine hinreichende Versorgung der Lagerung mit Schmiermittel gewährleistet ist. Dabei soll eine kostengünstige Konzeption möglich sein.

Die **Lösung** dieser Aufgabe durch die Erfindung ist dadurch gekennzeichnet, dass die beiden Innenringe der beiden Wälzlager einstückig miteinander ausgeführt sind und wobei die beiden Außenringe als jeweils separate Ringe ausgebildet sind. Zwischen den Außenringen ist ein Zwischenelement zum Erzeugen von Vorspannung in der Lagereinheit angeordnet und das Zwischenelement bildet zusammen mit den Außenringen eine bündige außenzylindrische Fläche, wobei Außenringe mittels des Zwischenelementes und/oder des Volumenelementes formschlüssig verbunden sind.

Die beiden Wälzlager sind dabei gemäß einer bevorzugten Ausführungsform nebeneinander und aneinander angrenzend angeordnet, wobei das Volumenelement im axialen Bereich zwischen den Wälzkörpern der beiden Wälzlager angeordnet ist. Das Volumenelement ist bevorzugt als ringförmiger, insbesondere massiver Köper ausgebildet. Möglich ist aber auch eine hohle Ausgestaltung des Volumenelements.

Das Volumenelement kann sich über den Großteil der radialen Erstreckung des Ringraums, insbesondere über mindestens 50 % der radialen Erstreckung des Ringraums, ausdehnen.

Das Volumenelement kann gemäß einer Weiterbildung als erweiterter Teil eines Wälzlagerkäfigs ausgebildet sein.

Das Volumenelement kann ferner mittels einer formschlüssigen Verbindung im Ringraum axial festgelegt sein. Es kann zum Außenring eine Abdichtung des Ringraums bilden.

Das Zwischenelement ist bevorzugt ein Federelement, das eine axiale Vorspannung in den Wälzlagern erzeugt. Das Federelement kann auch durch das Volumenelement selber gebildet werden.

Das Zwischenelement kann auch ein Verbindungselement sein, das die Außenringe zusammenhaltet und eine axiale Vorspannung in den Wälzlagern erzeugt.

Das Volumenelement kann aus Metall, insbesondere aus Stahl oder Leichtmetall, aus Kunststoffmaterial oder aus keramischem Material bestehen.

Die Wälzlager sind bevorzugt als Kugellager ausgebildet, insbesondere als Rillenkugellager oder Schrägkugellager, wobei die Kugeln insbesondere aus keramischem Material bestehen.

Die Lagereinheit ist bevorzugt Bestandteil eines Ladedruckerzeugers einer Brennkraftmaschine, wobei der Ladedruckerzeuger ein Abgasturbolader, ein mechanischer Kompressor oder eine gasdynamische Druckwellenmaschine ist.

Um eine möglichst kostengünstige, aber auch über die gesamte Lebensdauer funktionsfähige Lösung zur Verfügung zu stellen, sieht die Erfindung also vor, dass eine zumindest zweireihige Wälzlagerung eingesetzt wird, die zwischen den Wälzkörperreihen zumindest ein angeordnetes Zwischenelement aufweist. Dieses Zwischenteil füllt zumindest einen Teil des vorhandenen Zwischenraumes aus mit dem Ziel, das sich im Bereich der Wälzkörperreihen befindliche Schmiermittel in den Laufbahnbereichen zu halten. Ferner kann vorgesehen werden, dass zwischen den Wälzkörperreihen und den Lagerstirnseiten ein Abschlusselement angeordnet wird. Dieses Abschlusselement kann einen Großteil des vorhandenen Zwischenraumes ausfüllen mit dem Ziel, das sich im Bereich der Wälzkörperreihen befindliche Schmiermittel in den Laufbahnbereichen zu halten.

Während häufig bei bekannten Ladersystemen eine horizontale Ausrichtung der rotierenden Welle gegeben ist, bei der die Schmiermittelversorgung der Lagerung relativ unproblematisch ist, ist es mit der vorgeschlagenen Lösung auch möglich, bei einer von Null Grad, d. h. von der Horizontalen, abweichenden Anordnung Welle die Lagerung mit ausreichend Schmiermittel zu versorgen, so dass eine ausreichende Schmierung der Walzlagerreihen über die zumeist übliche gesamte Lebensdauer von 300.000 km gewährleistet ist. Der erfindungsgemäße Vorschlag erlaubt also eine schräge Einbaulage (im gesamten Bereich zwischen der horizontalen Anordnung der Welle bis zu deren vertikaler Anordnung), wobei ein fettgeschmiertes Systems vorgesehen ist.

Die vorgeschlagene Lösung ist insbesondere vorgesehen für einen Lader für Brennkraftmaschinen. Sie ist jedoch auch geeignet für alle Applikationen, bei denen eine Druckerhöhung eines Mediums Funktionsgrundlage ist.

Eine bevorzugte Lösung sieht vor, dass zusätzlich zu der genannten Lagerung eine separate Nadellagerung eingesetzt wird. Dabei kann zwischen der genannten Lagerung und der Nadellagerung ein Zwischenteil, bevorzugt ein hülsenförmiges Zwischenteil, zwischen einem Fest- und einem Loslager angeordnet sein.

Bevorzugt sind Nachschmiermöglichkeiten bei der Lagerung vorgesehen, um Schmiermittel, insbesondere Fett, nachführen zu können.

Vorgesehen kann auch werden, dass eine oder mehrere Laufbahnen der Lager direkt in den Außenumfang der zu lagernden Welle eingearbeitet ist; ein separater Lagerring entfällt dann entsprechend.

Das Volumenelement kann auch gleichzeitig eine Dichtungsfunktion übernehmen und hierfür entsprechend ausgebildet sein. Dabei ist sowohl eine labyrinthähnliche Konzeption für die Dichtung möglich als auch eine solche mit einer reibenden Dichtlippe.

Die Gesamtlagerung kann mit einem Zwischenelement versehen sein, bei der zumindest zwei Lagerreihen mit getrennten Lagerringen mit Hilfe einer zusätzlichen z. B. hülsenförmigen Aufnahme eine vormontierte Lagereinheit bilden. Die Gesamtlagerung mit Zwischenelement kann auch so ausgeführt sein, dass zumindest zwei Lagerreihen mit getrennten Lagerringen mit Hilfe eines zusätzlichen Verbindungselements eine vormontierte Lagereinheit bilden. Die Verbindung der beiden Ringe (als vormontierte Einheit) kann dabei mittels eines nachträglichen Umformprozesses des Verbindungselementes realisiert werden.

Das Verbindungselement kann direkt oder mit Hilfe von Zusatzelementen indirekt eine Zug- und/oder Druckkraft auf beide Lagerringe so ausüben, dass dies zu einer Vorspannung der beiden Lagerreihen führt.

Die Gesamtlagerung mit Zwischenelement kann auch so ausgeführt sein, dass im eingebauten Zustand zumindest eine Lagerreihe mit Hilfe zumindest eines zusätzlichen Passelements eine Druckkraft auf mindestens einen Lagerring so ausübt, dass dies zu einer definierten Lagerluft bzw. Lagervorspannung der Lagerreihe führt. Das Passelement kann gleichzeitig das Zwischenelement (ein- oder mehrteilig) bilden.

Das Volumenelement kann aus einem metallischen Material bestehen (z. B. aus Aluminium, aus Stahl oder aus Sintermaterial) oder auch aus einem nichtmetallischen Material (z. B. aus Kunststoff, aus Elastomermaterial oder aus Keramik). Es kann auch aus einem Compositmaterial bestehen.

Das Volumenelement kann mit einem Gussverfahren oder mit einem Pressverfahren hergestellt sein.

Die bevorzugten Lader-Typen, bei denen die Erfindung eingesetzt wird, sind der Abgasturbolader, der mechanische Lader (Kompressor) oder die gasdynamische Druckwellenmaschine (Hyprex- oder Comprex-Lader).

In der Zeichnung sind Ausführungsbeispiele der Erfindung dargestellt. Es zeigen:
- Fig. 1: den Radialschnitt durch eine Lagereinheit gemäß einer ersten Ausführungsform der Erfindung,
- Fig. 2: den Radialschnitt durch eine Lagereinheit gemäß einer zweiten Ausführungsform der Erfindung,
- Fig. 3: den Radialschnitt durch eine Lagereinheit gemäß einer dritten Ausführungsform der Erfindung,
- Fig. 4: den Radialschnitt durch eine Lagereinheit gemäß einer nicht erfindungsgemäßen Ausführungsform
- Fig. 5: den Radialschnitt durch eine Lagereinheit gemäß einer nicht erfindungsgemäßen Ausführungsform
- Fig. 6: den Schnitt durch einen Abgasturbolader mit einer Lagereinheit,
- Fig. 7: den Radialschnitt durch eine Lagereinheit gemäß einer nicht erfindungsgemäßen Ausführungsform
- Fig. 8: die Einzelheit "W" gemäß Fig. 7,
- Fig. 9: den Radialschnitt durch eine Lagereinheit gemäß einer nicht erfindungsgemäßen Ausführungsform
- Fig. 10: die Einzelheit "X" gemäß Fig. 9,
- Fig. 11: den Radialschnitt durch eine Lagereinheit gemäß einer nicht erfindungsgemäßen Ausführungsform
- Fig. 12: die Einzelheit "Y" gemäß Fig. 11,
- Fig. 13: den Radialschnitt durch eine Lagereinheit gemäß einer nicht erfindungsgemäßen Ausführungsform und
- Fig. 14: die Einzelheit "Z" gemäß Fig. 13.

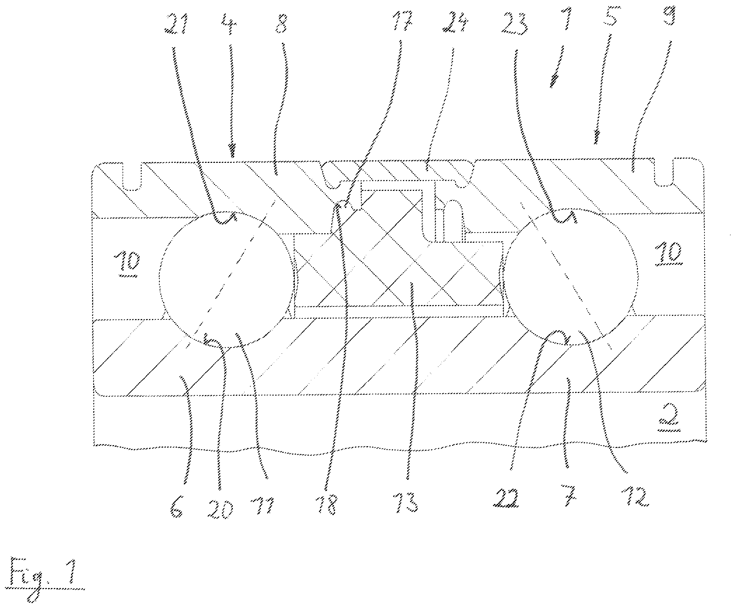

In Fig. 1 ist eine Lagereinheit 1 dargestellt, die zwei Wälzlager 4 und 5 aufweist, nämlich ein erstes Wälzlager 4 und ein zweites Wälzlager 5. Beide Wälzlager sind als Rillenkugellager ausgebildet und weisen jeweils eine Reihe Wälzkörper (Kugeln) 11 bzw. 12 auf. Beide Wälzlager 4, 5 haben einen gemeinsamen Innenring 6 bzw. 7, der einstückig ausgebildet ist; indes weist jedes Lager 4, 5 einen Außenring 8 bzw. 9 auf.

Mit der Lagereinheit 1 wird eine nur angedeutete Welle 2 eines Ladedruckerzeugers eines Verbrennungsmotors gelagert.

Zwischen den Außenringen 8, 9 und dem einstückigen Innenring 6, 7 der beiden Lager 4, 5 wird ein Ringraum 10 definiert, in dem bei bestimmungsgemäßem Gebrauch der Lagereinheit 1 Schmierfett eingebracht ist.

Um das Schmierfett möglichst im Bereich der Laufbahnen 20, 21, 22 und 23 der beiden Lager 4, 5 zu halten, und zwar auch dann, wenn die Welle 2 nicht horizontal, sondern abweichend von der Horizontalen gelagert wird, ist ein Volumenelement 13 im Ringraum 10 zwischen Außen- und Innenringen angeordnet.

Es handelt sich vorliegend um einen aus Kunststoffmaterial bestehenden Ring, der für den Schmierstoff undurchdringlich ist. Dieser verdrängt das Schmierfett aus dem Ringraum 10 in dem axialen Bereich, über den sich das Volumenelement erstreckt, so dass das Fett im Bereich der Laufbahnen 20, 21, 22, 23 gehalten wird.

Die axiale Festlegung des Volumenelements 13 erfolgt im Ausführungsbeispiel gemäß Fig. 1 durch eine formschlüssige Verbindung 17, 18. Diese weist einen Vorsprung 17 auf, der in eine formkongruente Ausnehmung 18 eingreift. Sowohl der Vorsprung 17 als auch die Ausnehmung 18 sind rotationssymmetrisch ausgebildet. Schnappt bei der Montage der Vorsprung 17 in die Ausnehmung 18 ein, liegt das Volumenelement 13 axial fest.

Die beiden Außenringe 8, 9 werden mittels eines Verbindungselements 24 zusammengehalten. Über das Verbindungselement 24 kann auch eine axiale Vorspannkraft zwischen den Lageraußenringen 8, 9 erzeugt werden, so dass sich Druckwinkel (mit gestrichelten Linien in die Kugeln 11, 12 eingezeichnet) in den Lagern 4, 5 ergeben.

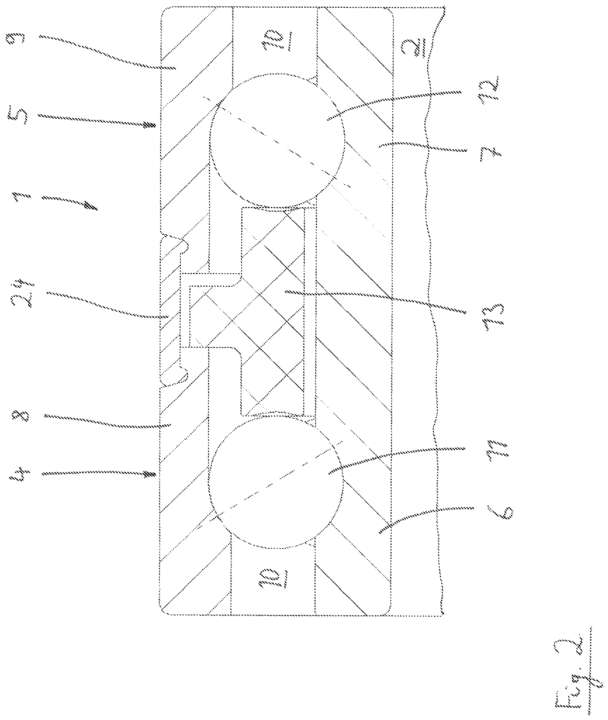

In Fig. 2 ist eine Alternative zur Lösung nach Fig. 1 skizziert. Das Volumenelement 13 ist wiederum zwischen den beiden Wälzkörperreihen 11, 12 im Ringraum 10 angeordnet. Hier ist auf eine axiale Fixierung des Volumenelements 13 mittels einer formschlüssigen Verbindung verzichtet.

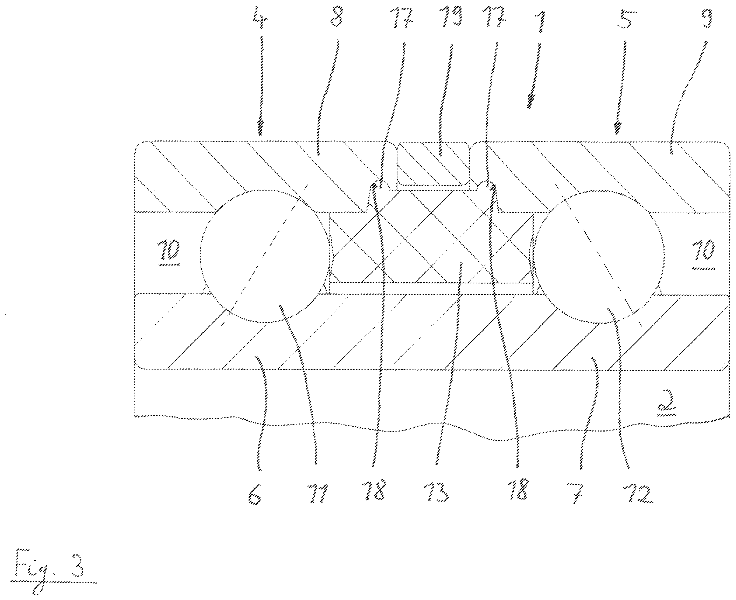

Bei der Lösung gemäß Fig. 3 ist zwischen den beiden Lageraußenringen 8, 9 ein Federelement 19 angeordnet, das die beiden Lageraußenringe 8, 9 voneinander abdrängt und so eine Vorspannung in der Lagereinheit 1 erzeugt. Das Volumenelement 13 ist hier über zwei formschlüssige Verbindungen 17, 18 axial festgelegt. Durch die Vorsprünge 17 in den Ausnehmungen 18 kann im Übrigen auch durch das Volumenelement 13 selber eine Vorspannkraft in der Lagereinheit erzeugt werden.

Abhängig von der Richtung der Vorspannkraft kann eine Lagerung in O-Anordnung oder in X-Anordnung realisiert werden.

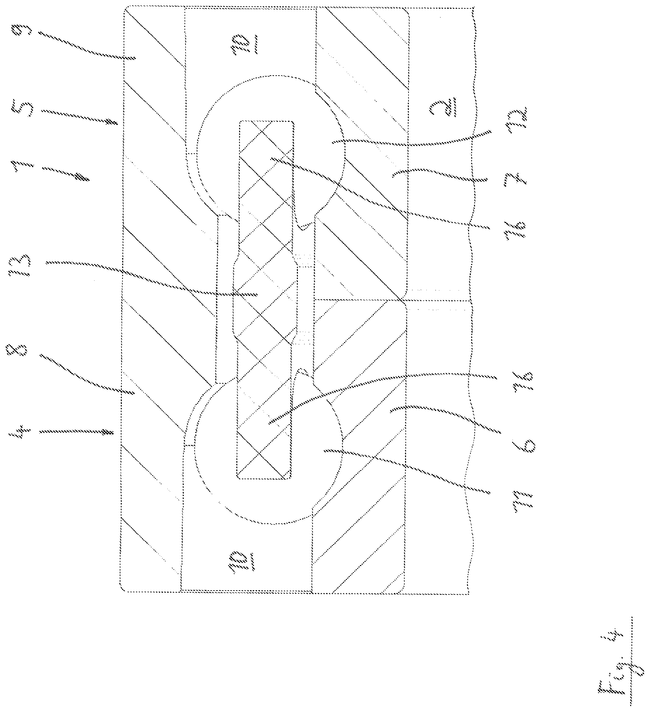

Bei der Anordnung gemäß Fig. 4 ist vorgesehen, dass Wälzlagerkäfige 16 eingesetzt werden, um die Kugeln 11, 12 zu führen. Das Volumenelement 13 ist hier am Käfig angeordnet, d. h. es stellt quasi einen Fortsatz des Käfigs dar, der in den Ringraum zwischen den beiden Kugelreihen 11, 12 hineinreicht und hier die beschriebene Fettverdrängung bewerkstelligt. Im Unterschied zu den vorstehend beschriebenen Lösungen ist hier der Lageraußenring 8, 9 beider Lager 4, 5 einstückig ausgebildet, während separate Lagerinnenringe 6, 7 zum Einsatz kommen.

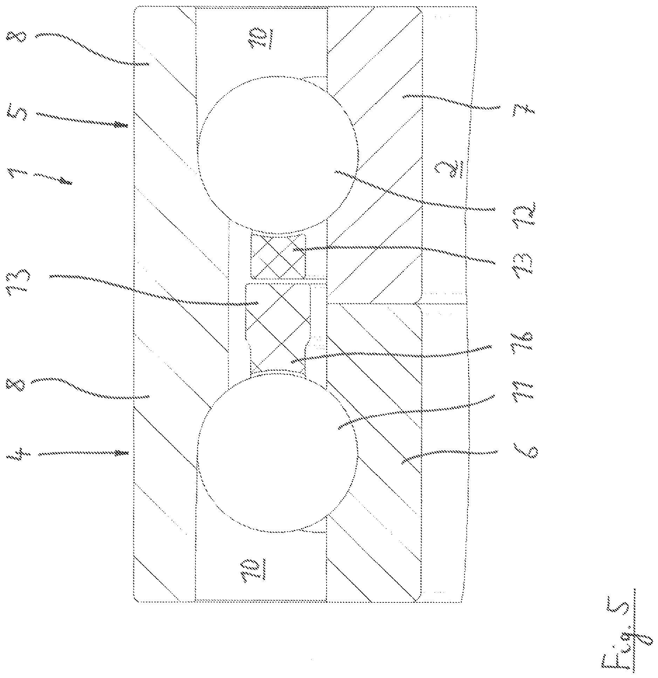

Wie bei der Anordnung gemäß Fig. 5 gesehen werden kann, kann auch ein Volumenelement 13 am Käfig 16 eines der Lager 4 angeordnet sein (s. linke Seite in Fig. 5), während daneben ein weiteres separates Volumenelement 13 zum Einsatz kommt (s. rechte Seite in Fig. 5).

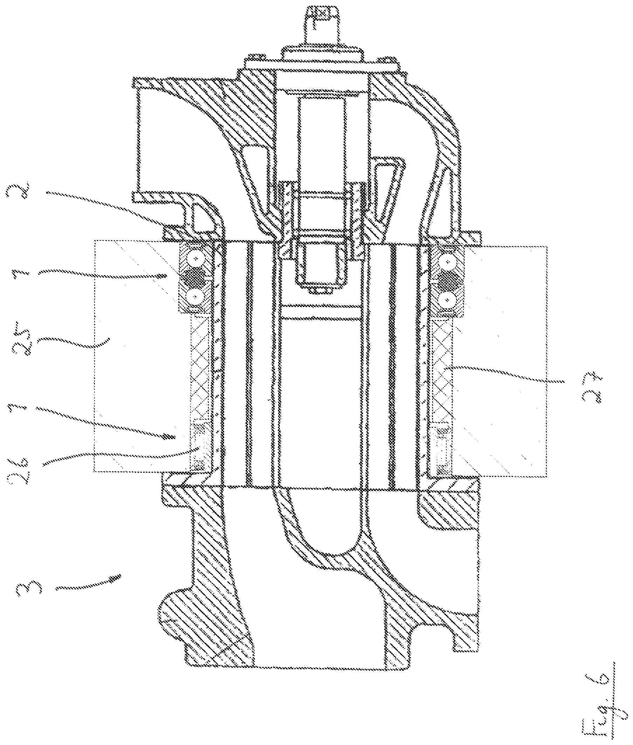

In Fig. 6 ist ein Abgasturbolader 3 skizziert, dessen Welle 2 durch die Lagereinheit 1 gelagert wird, d. h. in einem Gehäuse 25 drehbar angeordnet ist. Hierbei besteht die Lagereinheit - im rechten Bereich - aus einer Lagerung, wie sie in den Figuren 1 bis 5 dargestellt ist und die als Festleger fungiert. Ergänzend kommt - im linken Bereich - ein Nadellager 26 als Loslager zum Einsatz. Zwischen den beiden Lagersystemen ist eine Zwischenhülse 27 angeordnet. Auch die Zwischenhülse sorgt dafür, dass das Schmierfett im Bereich der Lagerlaufbahnen bleibt.

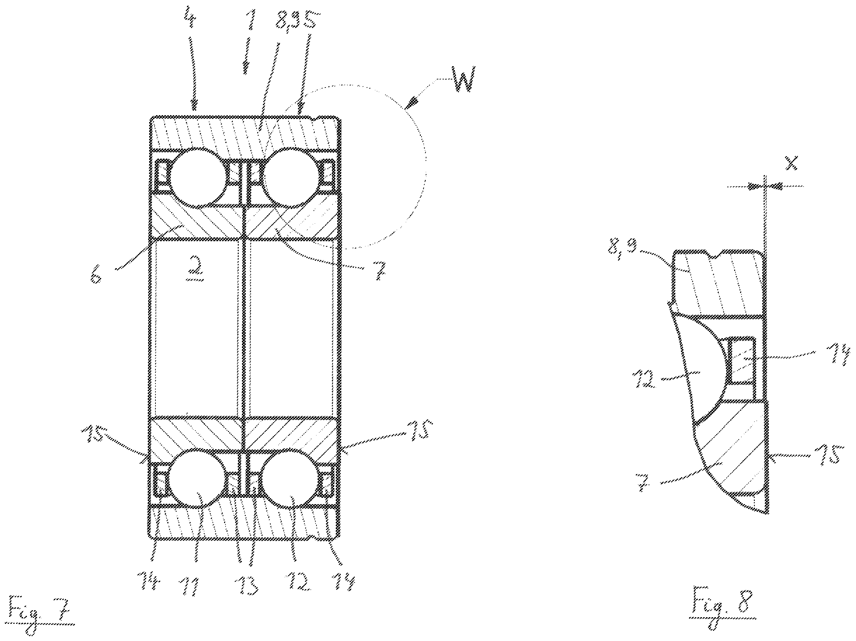

In Fig. 7 und 8 ist eine weitere Variante skizziert. Hier ist vorgesehen, dass neben dem Volumenelement 13 zwischen den beiden Wälzkörperreihen 11, 12 - d. h. genauer gesagt: neben zwei Volumenelementen 13 - im Bereich der Stirnseiten 15 der beiden Lager 4, 5 je ein weiteres Volumenelement 14 im Ringraum 10 angeordnet ist. Hierdurch wird verhindert, dass Fett seitlich aus den Lagern 4, 5 aus dem Bereich der Laufbahnen austritt.

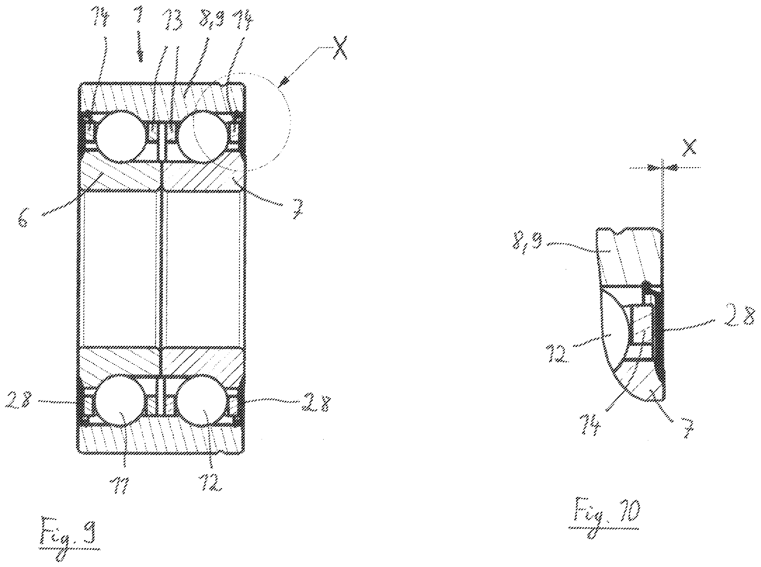

Nicht dargestellt, aber auch möglich ist es, dass das Volumenelement 14 im Bereich der Stirnseite 15 in analoger Weise axial in Position gehalten wird, wie es in den Figuren 1 oder 3 skizziert ist, d. h. durch eine formschlüssige Verbindung 17, 18. In Fig. 9 und Fig. 10 ist zu sehen, dass an den Volumenelementen 14 oder im Bereich der Volumenelemente 14 Dichtungen 28 angeordnet sind, die eine seitliche Abdichtung des Lagers sicherstellen.

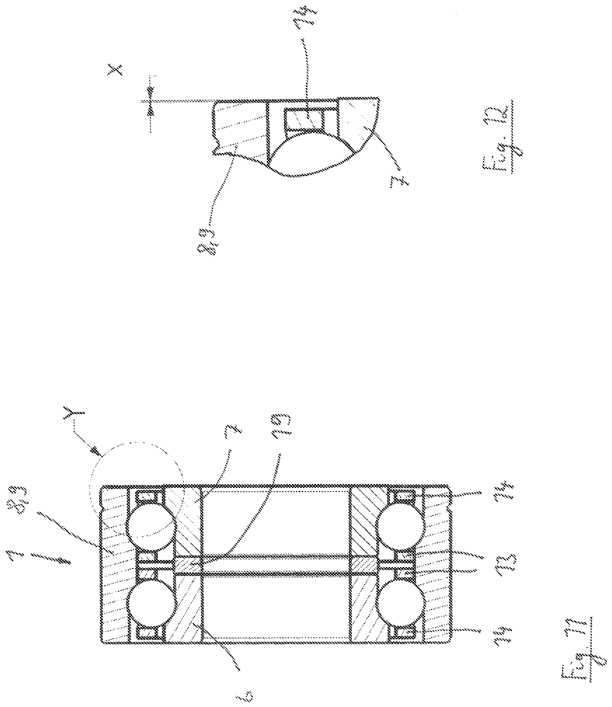

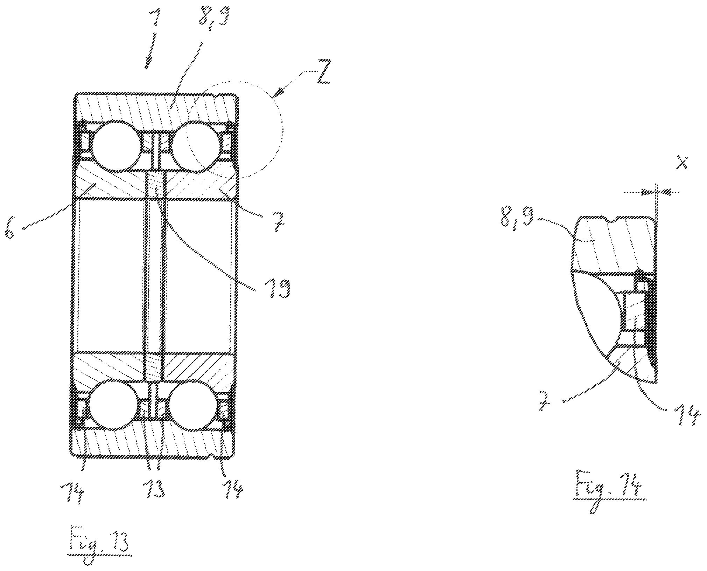

In den Figuren 11 bis 14 sind weitere alternative Anordnungen skizziert, bei denen ein Federelement 19 zwischen den beiden Lagern 4, 5 bzw. genauer gesagt zwischen den Lagerinnenringen 6, 7 für eine Vorspannung in der Lagereinheit sorgen.

In den Figuren 8, 10, 12 und 14 ist angedeutet, dass ein definierter axialer Überstand x des Innenrings über den Außenring vorgesehen sein kann.

### Bezugszeichenliste

- 1: Lagereinheit
- 2: Welle
- 3: Druckerzeugungsvorrichtung (Ladedruckerzeuger)
- 4: erstes Wälzlager
- 5: zweites Wälzlager
- 6: Innenring
- 7: Innenring
- 8: Außenring
- 9: Außenring
- 10: Ringraum
- 11: Wälzkörper (Kugel)
- 12: Wälzkörper (Kugel)
- 13: Volumenelement
- 14: Volumenelement
- 15: Stirnseite
- 16: Wälzlagerkäfig
- 17, 18: formschlüssige Verbindung
- 17: Teil der formschlüssigen Verbindung (Vorsprung)
- 18: Teil der formschlüssigen Verbindung (Ausnehmung)
- 19: Federelement
- 20: Laufbahn
- 21: Laufbahn
- 22: Laufbahn
- 23: Laufbahn
- 24: Verbindungselement
- 25: Gehäuse
- 26: Nadellager
- 27: Zwischenhülse
- 28: Dichtung

- x: axialer Überstand

## Patentansprüche

1. Ladedruckerzeuger (3) einer Brennkraftmaschine mit einer Lagereinheit (1) für eine Welle (2), wobei die Welle (2) durch mindestens ein erstes Wälzlager (4) und mindestens ein zweites Wälzlager (5) gelagert ist, wobei jedes Wälzlager (4, 5) einen Innenring (6, 7) und einen Außenring (8, 9) aufweist, wobei zwischen den Ringen (6, 7, 8, 9) ein Ringraum (10) gebildet wird und wobei in dem Ringraum (10) Wälzkörper (11, 12) angeordnet sind, wobei in dem Ringraum (10) mindestens ein Volumenelement (13, 14) angeordnet ist, das den Ringraum (10) in einem axialen Bereich zumindest teilweise ausfüllt,
**dadurch gekennzeichnet, dass**
die beiden Innenringe (6, 7) der beiden Wälzlager (4, 5) einstückig miteinander ausgeführt sind,
wobei die beiden Außenringe (8, 9) als jeweils separate Ringe ausgebildet sind,
wobei zwischen den Außenringen (8, 9) ein Zwischenelement (19, 24) zum Erzeugen von Vorspannung in der Lagereinheit angeordnet ist,
wobei das Zwischenelement (19, 24) zusammen mit den Außenringen (8. 9) eine bündige außenzylindrische Fläche bildet, und
wobei die Außenringe (8, 9) mittels des Zwischenelementes (19, 24) und/oder des Volumenelementes formschlüssig verbunden sind.

2. Ladedruckerzeuger nach Anspruch 1, **dadurch gekennzeichnet, dass** die beiden Wälzlager (4, 5) nebeneinander und aneinander angrenzend angeordnet sind, wobei das Volumenelement (13) im axialen Bereich zwischen den Wälzkörpern (11, 12) der beiden Wälzlager (4, 5) angeordnet ist.

3. Ladedruckerzeuger nach einem der Ansprüche 1 oder 2, **dadurch gekennzeichnet, dass** das Volumenelement (13, 14) als ringförmiger. insbesondere massiver Köper ausgebildet ist.

4. Ladedruckerzeuger nach einem der An sprüche 1 bis 3, **dadurch gekennzeichnet, dass** sich das Volumenelement (13, 14) über den Großteil der radialen Erstreckung des Ringraums (10), insbesondere über mindestens 50 % der radialen Erstreckung des Ringraums (10), erstreckt.

5. Ladedruckerzeuger nach einem der Ansprüche 1 bis 4, **dadurch gekennzeichnet, dass** das Volumenelement (13,14) als erweiterter Teil eines Wälzlagerkäfigs (16) ausgebildet ist.

6. Ladedruckerzeuger nach einem der Ansprüche 1 bis 5, **dadurch gekennzeichnet, dass** das Volumenelement (13, 14) mittels einer formschlüssigen Verbindung (17, 18) im Ringraum (10) axial festgelegt ist.

7. Ladedruckerzeuger nach einem der Ansprüche 1 bis 6, **dadurch gekennzeichnet, dass** das Volumenelement (13, 14) zum Außenring (8, 9) eine Abdichtung des Ringraums (10) bildet.

8. Ladedruckerzeuger nach einem der Ansprüche 1 bis 7, **dadurch gekennzeichnet, dass** das Zwischenelernent ein Federelement (19) ist, das eine axiale Vorspannung in den Wälzlagern (4, 5) erzeugt

9. Ladedruckerzeuger nach Anspruch 8, **dadurch gekennzeichnet, dass** das Federelement (19) durch das Volumenelement (13) selber gebildet wird.

10. Ladedruckerzeuper nach einem der Ansprüche 1 bis 7, **dadurch gekennzeichnet, dass** das Zwischenelement ein Verblndungselement (24) ist, das die Außenringe zusammenhallet und eine axiale Vorspannung in den Wälzlagern (4, 5) erzeugt.

11. Ladedruckerzeuger nach einem der Ansprüche 1 bis 10, **dadurch gekennzeichnet, dass** das Volumenelement (13, 14) aus Metall, insbesondere aus Stahl oder Leichtmetall, aus Kunststoffmaterial oder aus keramischem Material besteht.

12. Ladedruckerzeuger nach einem der Ansprüche 1 bis 11, **dadurch gekennzeichnet, dass** die Wälzlager (4, 5) als Kugellager ausgebildet sind, insbesondere als Rillenkugellager oder Schrägkugellager, wobei die Kugeln (11, 12) insbesondere aus keramischem Material bestehen.

13. Ladedruckerzeuger nach einem der Ansprüche 1 bis 12, **dadurch gekennzeichnet, dass** er ein Abgasturbolader, ein mechanischer Kompressor oder eine gasdynamische Druckwellenmaschine ist.

## Claims

1. Charge pressure generator (3) of an internal combustion engine, having a bearing unit (1) for a shaft (2), wherein the shaft (2) is mounted by means of at least one first rolling bearing (4) and at least one second rolling bearing (5), wherein each rolling bearing (4, 5) has an inner ring (6, 7) and an outer ring (8, 9), wherein an annular space (10) is formed between the rings (6, 7, 8, 9) and wherein rolling bodies (11, 12) are arranged in the annular space (10), wherein, in the annular space (10), there is arranged at least one volume element (13, 14) which at least partially fills the annular space (10) in an axial region,
**characterized in that**
the two inner rings (6, 7) of the two rolling bearings (4, 5) are formed as a single piece with one another, wherein the two outer rings (8, 9) are formed as respectively separate rings,
wherein, between the outer rings (8, 9), there is arranged an intermediate element (19, 24) for generating preload in the bearing unit,
wherein the intermediate element (19, 24) together with the outer rings (8, 9) forms a flush outer cylindrical surface, and
wherein the outer rings (8, 9) are connected in positively locking fashion by means of the intermediate element (19, 24) and/or the volume element.

2. Charge pressure generator according to Claim 1, **characterized in that** the two rolling bearings (4, 5) are arranged next to one another and so as to adjoin one another, wherein the volume element (13) is arranged in the axial region between the rolling bodies (11, 12) of the two rolling bearings (4, 5).

3. Charge pressure generator according to either of Claims 1 and 2, **characterized in that** the volume element (13, 14) is in the form of an annular, in particular solid body.

4. Charge pressure generator according to any of Claims 1 to 3, **characterized in that** the volume element (13, 14) extends over the major part of the radial extent of the annular space (10), in particular over at least 50% of the radial extent of the annular space (10).

5. Charge pressure generator according to any of Claims 1 to 4, **characterized in that** the volume element (13, 14) is formed as an extended part of a rolling bearing cage (16) .

6. Charge pressure generator according to any of Claims 1 to 5, **characterized in that** the volume element (13, 14) is axially fixed in the annular space (10) by means of a positively locking connection (17, 18).

7. Charge pressure generator according to any of Claims 1 to 6, **characterized in that** the volume element (13, 14) forms, with the outer ring (8, 9), a seal of the annular space (10).

8. Charge pressure generator according to any of Claims 1 to 7, **characterized in that** the intermediate element is a spring element (19) which generates an axial preload in the rolling bearings (4, 5).

9. Charge pressure generator according to Claim 8, **characterized in that** the spring element (19) is formed by the volume element (13) itself.

10. Charge pressure generator according to any of Claims 1 to 7, **characterized in that** the intermediate element is a connecting element (24) which holds the outer rings together and which generates an axial preload in the rolling bearings (4, 5).

11. Charge pressure generator according to any of Claims 1 to 10, **characterized in that** the volume element (13, 14) is composed of metal, in particular of steel or a light metal, of plastics material or of ceramic material.

12. Charge pressure generator according to any of Claims 1 to 11, **characterized in that** the rolling bearings (4, 5) are formed as ball bearings, in particular as deep-groove ball bearings or angular-contact ball bearings, wherein the balls (11, 12) are composed in particular of ceramic material.

13. Charge pressure generator according to any of Claims 1 to 12, **characterized in that** said charge pressure generator is an exhaust-gas turbocharger, a mechanical compressor or a gas-dynamic pressure wave machine.

## Revendications

1. Générateur de pression d'admission (3) d'un moteur à combustion interne comprenant une unité de palier (1) destinée à un arbre (2), l'arbre (2) étant supporté par au moins un premier palier à rouleaux (4) et au moins un deuxième palier à rouleaux (5), chaque palier à rouleaux (4, 5) comportant une bague intérieure (6, 7) et une bague extérieure (8, 9), un espace annulaire (10) étant formé entre les bagues (6, 7, 8, 9) et des éléments roulants (11, 12) sont disposés dans l'espace annulaire (10), au moins un élément de volume (13, 14) étant disposé dans l'espace annulaire (10) et remplissant au moins partiellement l'espace annulaire (10) dans une région axiale,
**caractérisé en ce que**
les deux bagues intérieures (6, 7) des deux paliers à rouleaux (4, 5) sont réalisées d'une seule pièce,
les deux bagues extérieures (8, 9) étant chacune conçues comme des bagues séparées,
un élément intermédiaire (19, 24) destiné à générer une précontrainte étant disposé dans l'unité de palier entre les bagues extérieures (8, 9),
l'élément intermédiaire (19, 24) formant conjointement avec les bagues extérieures (8, 9) une surface cylindrique extérieure affleurée, et
les bagues extérieures (8, 9) étant reliées par complémentarité de formes au moyen de l'élément intermédiaire (19, 24) et/ou de l'élément de volume.

2. Générateur de pression d'alimentation selon la revendication 1, **caractérisé en ce que** les deux paliers à rouleaux (4, 5) sont disposés côte à côte et de manière adjacente l'un à l'autre, l'élément de volume (13) étant disposé dans la région axiale entre les éléments roulants (11, 12) des deux paliers à rouleaux (4, 5).

3. Générateur de pression d'alimentation selon l'une des revendications 1 ou 2, **caractérisé en ce que** l'élément de volume (13, 14) est conçu comme un corps annulaire, notamment plein.

4. Générateur de pression d'alimentation selon l'une des revendications 1 à 3, **caractérisé en ce que** l'élément de volume (13, 14) s'étend sur la majeure partie de l'extension radiale de l'espace annulaire (10), en particulier sur au moins 50 % de l'extension radiale de l'espace annulaire (10).

5. Générateur de pression d'alimentation selon l'une des revendications 1 à 4, **caractérisé en ce que** l'élément de volume (13, 14) est conçu comme une partie élargie d'une cage de palier à rouleaux (16).

6. Générateur de pression d'alimentation selon l'une des revendications 1 à 5, **caractérisé en ce que** l'élément de volume (13, 14) est fixé axialement dans l'espace annulaire (10) au moyen d'une liaison à complémentarité de formes (17, 18).

7. Générateur de pression d'alimentation selon l'une des revendications 1 à 6, **caractérisé en ce que** l'élément de volume (13, 14) forme une étanchéité de l'espace annulaire (10) par rapport à la bague extérieure (8, 9).

8. Générateur de pression d'alimentation selon l'une des revendications 1 à 7, **caractérisé en ce que** l'élément intermédiaire est un élément à ressort (19) qui génère une précontrainte axiale dans les paliers à rouleaux (4, 5).

9. Générateur de pression d'alimentation selon la revendication 8, **caractérisé en ce que** l'élément à ressort (19) est formé par l'élément de volume (13) lui-même.

10. Générateur de pression d'alimentation selon l'une des revendications 1 à 7, **caractérisé en ce que** l'élément intermédiaire est un élément de liaison (24) qui maintient ensemble les bagues extérieures et génère une précontrainte axiale dans les paliers à rouleaux (4, 5).

11. Générateur de pression d'alimentation selon l'une des revendications 1 à 10, **caractérisé en ce que** l'élément de volume (13, 14) est en métal, notamment en acier ou en métal léger, en matière plastique ou en céramique.

12. Générateur de pression d'alimentation selon l'une des revendications 1 à 11, **caractérisé en ce que** les paliers à rouleaux (4, 5) sont conçus comme des paliers à billes, notamment comme des paliers à billes rainurés ou des paliers à billes à contact oblique, les billes (11, 12) étant notamment en céramique.

13. Générateur de pression d'alimentation selon l'une des revendications 1 à 12, **caractérisé en ce que** celui-ci est un turbocompresseur à gaz d'échappement, un compresseur mécanique ou une machine à onde de pression à dynamique des gaz.
